# EUROPEAN PATENT APPLICATION

(11) **EP 4 564 620 A1**
(43) Date of publication of application: **04.06.2025**
(21) Application number: 24213858.4
(22) Date of filing: 19.11.2024
(51) Int. Cl.: H02B 1/28, B60R 16/023, H02G 3/08, H05K 5/06

(54) **POWER DISTRIBUTION MODULE, HOUSING THEREOF AND ASSEMBLY FOR HOUSING ONE OR MORE ELECTRICAL COMPONENTS**

(30) Priority: 30.11.2023 CN 202311628860
(71) Applicant: Suzhou Littelfuse OVS Co., Ltd., Suzhou Jiangsu 215021 (CN)
(72) Inventor: Pan, Shangchun, Suzhou, 215021 (CN); Liu, Renan, Suzhou, 215021 (CN); Li, Vector, Suzhou, 215021 (CN)
(74) Representative: Arnold & Siedsma

(57) **Abstract**

A power distribution module (100) includes a base (104) comprising a lower cavity wall (111), and a cover (106) comprising an upper cavity wall (113), wherein the lower cavity wall (111) and the upper cavity wall (113) define a cavity (108) operable to house one or more protection components. The power distribution module (100) further includes a sealing member (110) engaged with the upper cavity wall (113) and the lower cavity wall (111), wherein the sealing member (110) includes a wall (140) and a plurality of engagement features (146) along the wall (140), wherein the plurality of engagement features (146) are operable to couple the sealing member (110) to the upper cavity wall (113) or to the lower cavity wall (111). The sealing member (110) further includes a plurality of ridges (152) extending from the wall (140), wherein the plurality of ridges (152) are operable to engage the upper cavity wall (113) or the lower cavity wall (111).

## Description

### Field of the Disclosure

Embodiments of the present disclosure relate generally to the field of electrical devices and, more particularly, to a power distribution housing having an improved seal.

### Background of the Disclosure

Power distribution housings have traditionally been used to house electrical components, such as fuse blocks, fuses, relays, and the like. Exposure of the power distribution housing to adverse environments and weather conditions can damage or destroy electrical components within the housing. Although various power distribution housings have been developed that are intended to protect internal electrical components from such adverse external conditions, finding effective sealing members remains a challenge.

It is with respect to these and other considerations that the present improvements may be useful.

### Summary

This Summary is provided to introduce a selection of concepts in a simplified form that are further described below in the Detailed Description. This Summary is not intended to identify key features or essential features of the claimed subject matter, nor is it intended as an aid in determining the scope of the claimed subject matter.

In one or more embodiments, a power distribution module may include a base comprising a lower cavity wall, and a cover comprising an upper cavity wall, wherein the lower cavity wall and the upper cavity wall define a cavity operable to house one or more protection components. The power distribution module may further include a sealing member engaged with the upper cavity wall and the lower cavity wall, wherein the sealing member includes a wall and a plurality of engagement features along the wall, wherein the plurality of engagement features are operable to couple the sealing member to the upper cavity wall or to the lower cavity wall. The sealing member may further include a plurality of ridges extending from the wall, wherein the plurality of ridges are operable to engage the upper cavity wall or the lower cavity wall.

In one or more embodiments, a housing of a power distribution module may include a base comprising a lower cavity wall, and a cover comprising an upper cavity wall, wherein the lower cavity wall and the upper cavity wall define a cavity operable to house one or more protection components. The housing may further include a sealing member engaged with the upper cavity wall and the lower cavity wall, wherein the sealing member includes a wall, a plurality of engagement features along the wall, wherein the plurality of engagement features are operable to couple the sealing member to the upper cavity wall or to the lower cavity wall and a plurality of ridges extending from the wall, wherein the plurality of ridges are operable to engage the upper cavity wall or the lower cavity wall.

In one or more embodiments, an assembly for housing one or more electrical components may include a base comprising a lower cavity wall, and a cover coupled to the base, wherein the cover comprises an upper cavity wall, and wherein the lower cavity wall and the upper cavity wall define a cavity operable to house one or more protection components. The assembly may further include a flexible sealing member engaged with the upper cavity wall and the lower cavity wall, wherein the sealing member includes a wall and a plurality of engagement features protruding from the wall, wherein the plurality of engagement features are operable to couple the sealing member to at least one of the following: the upper cavity wall, and the lower cavity wall. The sealing member may further include a plurality of ridges extending laterally from a surface of the wall, wherein the plurality of ridges are operable to engage the upper cavity wall or the lower cavity wall.

### Brief Description of the Drawings

The accompanying drawings illustrate example approaches of the disclosed embodiments so far devised for the practical application of the principles thereof, and in which:
**FIG. 1A** is a perspective view of a power distribution module including a cover, according to an example approach of the disclosure;
**FIG. 1B** is a perspective view of the power distribution module with the cover removed, according to an example approach of the disclosure;
**FIG. 2** is a perspective view of an underside of the cover including a sealing member, according to an example approach of the disclosure;
**FIG. 3** is a perspective view of an underside of the cover showing a channel, according to an example approach of the disclosure;
**FIGs. 4A** - **4B** are perspective views of a sealing member, according to an example approach of the disclosure;
**FIG. 5** is a cross-sectional view of the power distribution module, according to an example approach of the disclosure;
**FIGs. 6A** - **6B** are cross-sectional views of a portion of the power distribution module, according to an example approach of the disclosure;
**FIG. 7** is a perspective view of a power distribution module with a cover removed, according to an example approach of the disclosure;
**FIG. 8** is a cross-sectional view of a portion of the power distribution module, according to an example approach of the disclosure;
**FIGs. 9A** - **9C** are perspective views of a sealing member, according to an example approach of the disclosure;
**FIG. 10** is an exploded view of the sealing member and a base of the power distribution module, according to an example approach of the disclosure; and
**FIG. 11** is a close-up view of a connection between the sealing member and the base of the power distribution module, according to an example approach of the disclosure.

The drawings are not necessarily to scale. The drawings are merely representations, not intended to portray specific parameters of the disclosure. The drawings are intended to depict typical embodiments of the disclosure, and therefore should not be considered as limiting in scope. In the drawings, like numbering represents like elements.

Furthermore, certain elements in some of the figures may be omitted, or illustrated not-to-scale, for illustrative clarity. Furthermore, for clarity, some reference numbers may be omitted in certain drawings.

### Detailed Description

Embodiments in accordance with the present disclosure will now be described more fully hereinafter with reference to the accompanying drawings. The assemblies, devices, and methods may be embodied in many different forms and should not be construed as being limited to the embodiments set forth herein. Rather, these embodiments are provided so that this disclosure will be thorough and complete, and will fully convey the scope of the system and method to those skilled in the art.

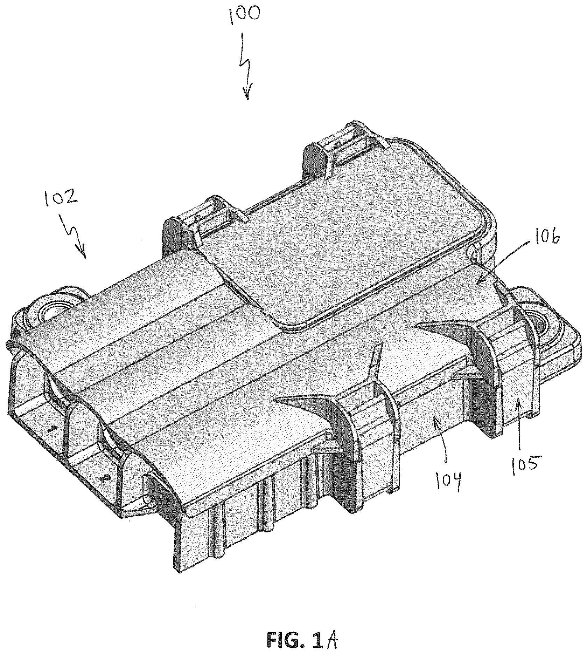

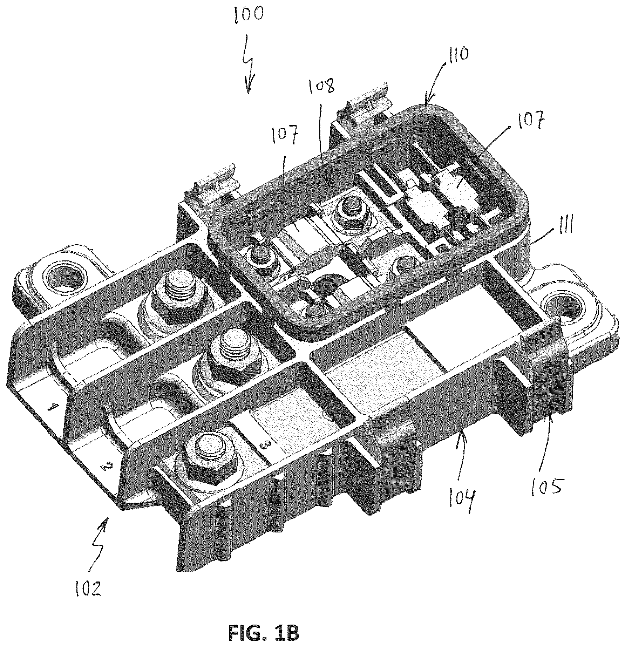

**FIGs. 1A - 1B** depict a power distribution module (PDM) 100 according to one or more embodiments of the present disclosure. As shown, the PDM 100 may include a housing 102 having a base 104 and a cover 106 secured to the base 104. Although not limited to any particular type or arrangement, the cover 106 may be secured to the base 104 by one or more fasteners 105. **FIG. 1A** demonstrates the PDM 100 with the cover 106, while **FIG. 1B** demonstrates the PDM 100 with the cover 106 removed. The cover 106 can be removed, for example, to replace an opened fuse within a cavity 108 defined by the base 104 and the cover 106. As best shown in **FIG. 1B****,** the housing 102 may enclose one or more electrical components 107 (e.g., fuses, relays, and the like) within a cavity 108 of the base 104. In some embodiments, the cover 106 can snap-fit to the base 104 and/or include the fasteners 105 to releasably secure the cover 106 with the base 104. Although not specifically illustrated, the cover 106 may also include means to further facilitate grasping and removal, such as tabs, projections, recesses, etc. Although non-limiting, the various components of the housing 102 may be made of an insulating material, such as an insulating plastic, e.g., nylon, glass-filled nylon, polyester and polycarbonate. In various embodiments, the base 104 and the cover 106 can be made of the same or different materials.

As will be described in greater detail herein, the cavity 108 may be surrounded by a flexible sealing member 110, which is secured or coupled to a lower cavity wall 111. The sealing member 110 is provided to prevent moisture and other contamination from reaching the electrical components 107. Although non-limiting, the sealing member 110 may be a polymer or an elastomer, such as silicon rubber, NBR, TPE, EPDM, FKM, and similar.

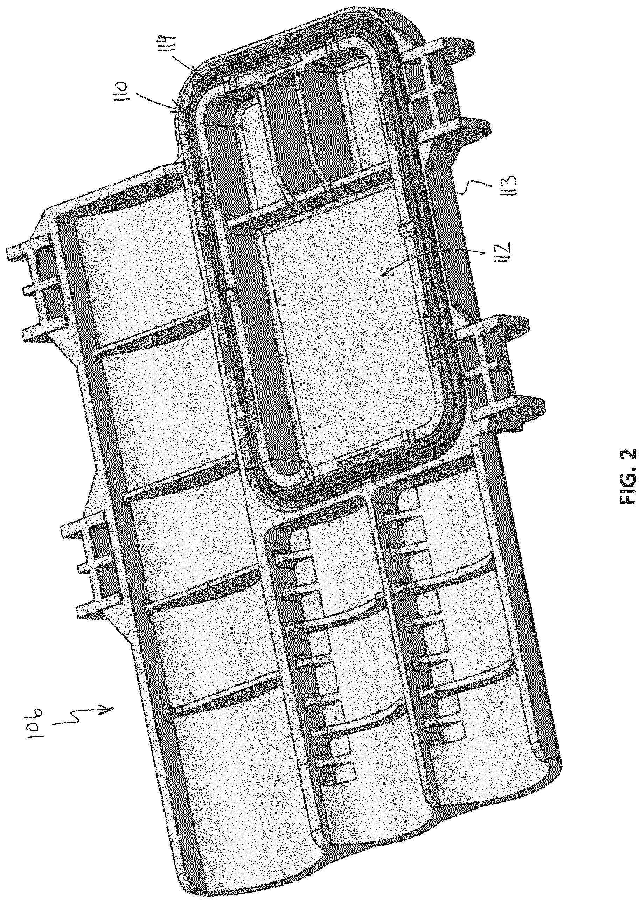

**FIG. 2** demonstrates an underside of the cover 106 according to one or more embodiments of the present disclosure. As shown, the cover 106 may include an upper cavity wall 113, which defines a second cavity 112. The second cavity 112 may be aligned with the cavity 108 of the base 104. As will be described in greater detail below, the cover 106 may receive the sealing member 110 within a channel 114 formed in the upper cavity wall 113. During use, the sealing member 110 acts as a mechanical gasket seated in the channel 114 such that compression resulting from engagement between the cover 106 and the base 104 creates a seal at the interface thereof.

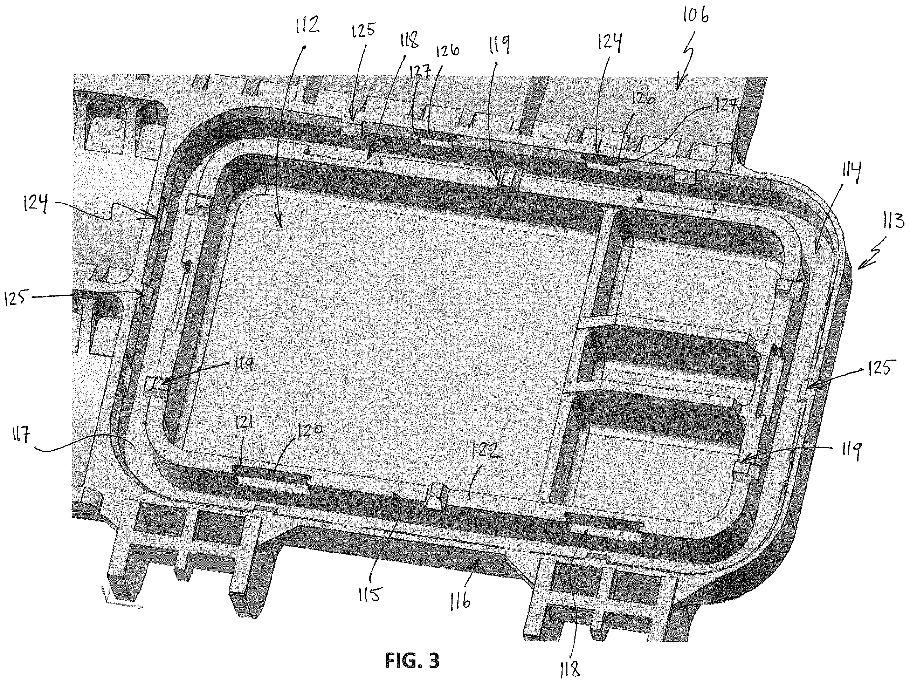

**FIG. 3** demonstrates the channel 114 of the cover 106 in greater detail. As shown, the channel 114 may be defined by an inner wall 115 and an outer wall 116 of the upper cavity wall 113. Between the inner wall 115 and the outer wall 116 is a base wall 117, which may be a flat surface extending perpendicular to the inner and outer walls 115, 116. Although non-limiting, the inner and outer walls 115, 116 may extend parallel to one another, and may be separated from one another by a constant distance.

In the embodiment shown, the inner wall 115 may include a plurality of retention slots 118 and a plurality of retention tabs 119, all of which are operable to engage the sealing member 110 to retain the sealing member 110 within the channel 114. Each of the retention slots 118 may include a back wall 120 connected with a pair of angled sidewalls 121. As shown, the angled sidewalls 121 extend away from one another, towards the back wall 120, to retain the sealing member 110 within the retention slots 118. The retention tabs 119 extend from a top surface 122 of the inner wall 115, and may include a lip or overhang 123 extending over the channel 114, towards the outer wall 116. Once the sealing member 110 is positioned within the channel 114, the overhang 123 prevents the sealing member 110 from being easily removed therefrom. Although six (6) retention slots 118 and a six (6) retention tabs 119 are depicted, it will be appreciated that a greater or lesser number of each may be possible in alternative embodiments.

The outer wall 116 may similarly include a plurality of retention slots 124 and a plurality of retention tabs 125, all of which are operable to engage the sealing member 110 to retain the sealing member 110 within the channel 114. Each of the retention slots 124 may include a back wall 126 connected with a pair of angled sidewalls 127. As shown, the angled sidewalls 127 extend away from one another towards the back wall 126 to retain the sealing member 110 within the retention slots 124. The retention tabs 125 extend from a top surface 128 of the outer wall 116, and may include a lip or overhang 129 extending over the channel 114, towards the inner wall 115. Although eight (8) retention slots 124 and a six (6) retention tabs 125 are depicted, it will be appreciated that a greater or lesser number of each may be possible in alternative embodiments.

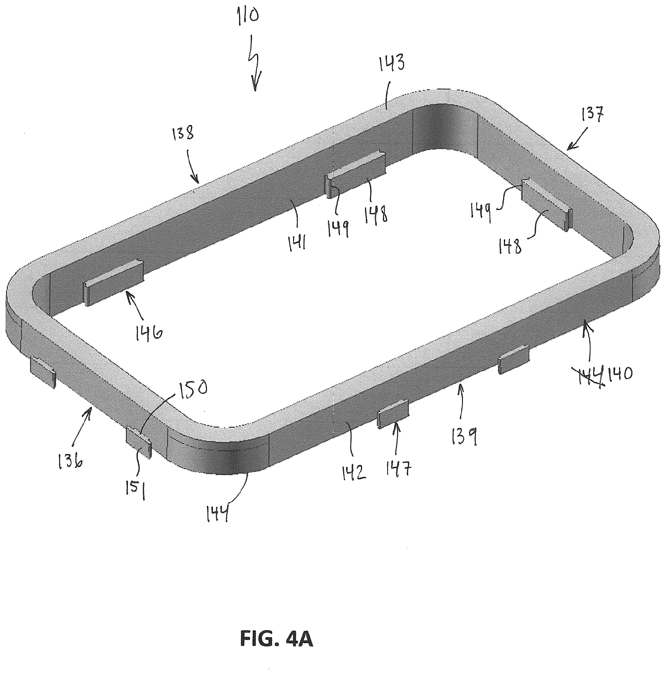

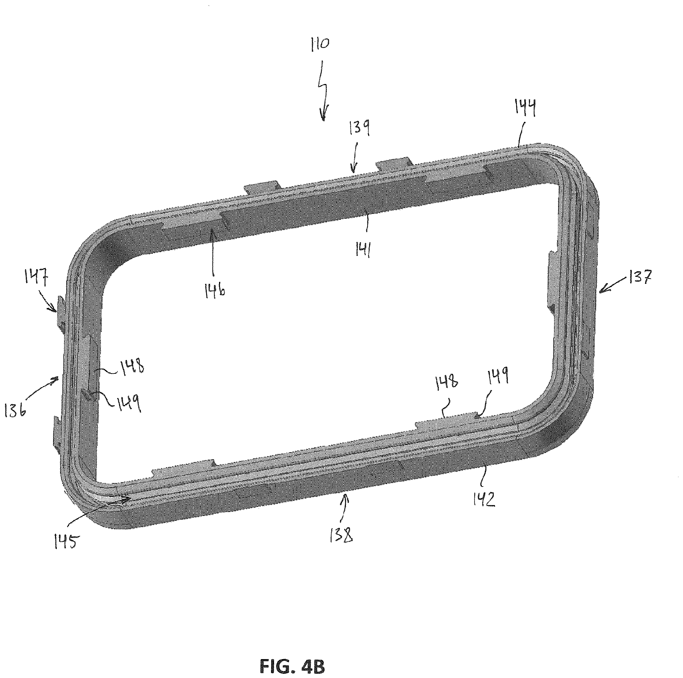

Turning now to **FIGs. 4A - 4B****,** the sealing member 110 will be described in greater detail. As shown, the sealing member 110 may include a first end 136 opposite a second end 137, and a first side 138 opposite a second side 139. The sealing member 110 may include a wall 140 having an inner wall/side 141, an outer wall/side 142, an upper surface 143, and an underside 144. As best shown in **FIG. 4B****,** the underside 144 may include a sealing member channel 145 operable to receive the lower cavity wall 111 of the base 104, as will be described in greater detail below.

As further shown, the sealing member 110 may include a first plurality of engagement members 146 along the inner side 141, and the second plurality of engagement members 147 along the outer side 142. Each of the first plurality of engagement members 146 may include a main wall 148 extending between a set of sidewalls 149. Said another way, each of the first plurality of engagement members 146 may have a convex swallow-tailed shape to complement the shape of each corresponding retention slot 118 of the inner wall 115 of the cover 106. Each of the second plurality of engagement members 147 may include a base 150 and the flange 151 extending from the base 150. Said another way, each of the second plurality of engagement members 146 may have a T-shape, which complements the shape of each corresponding retention slot 124 of the outer wall 116 of the cover 106. These swallow-tailed and "T" shaped features on the cover 106 and the sealing member 110 ensure that the components are assembled together with packaging force on the seal, which helps avoid the sealing member 110 from dropping out of cover 106 when opening the cover 106 from the base 104.

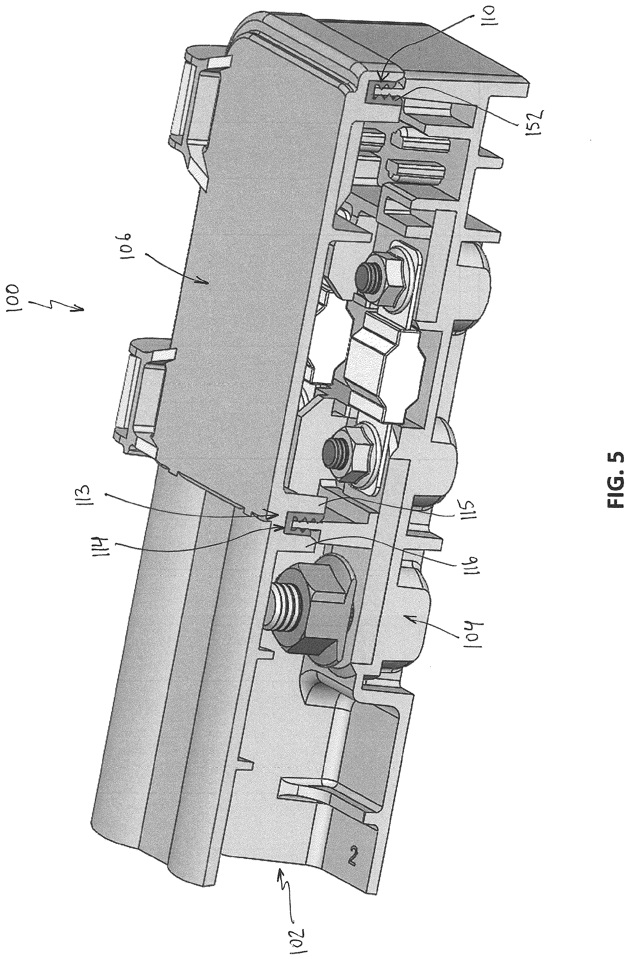

Turning now to **FIGs. 5 - 6B****,** engagement between the sealing member 110, the cover 106, and the base 104 will be described in greater detail. As shown, the sealing member 110 may be positioned atop the lower cavity wall 111 of the base 104 such that the inner side 141 and the outer side 142 straddle the lower cavity wall 111. In some embodiments, the sealing member 110 may have a plurality of ridges or teeth 152 extending from the inner side 141 and/or the outer side 142 for engagement with the surfaces of the lower cavity wall 111.

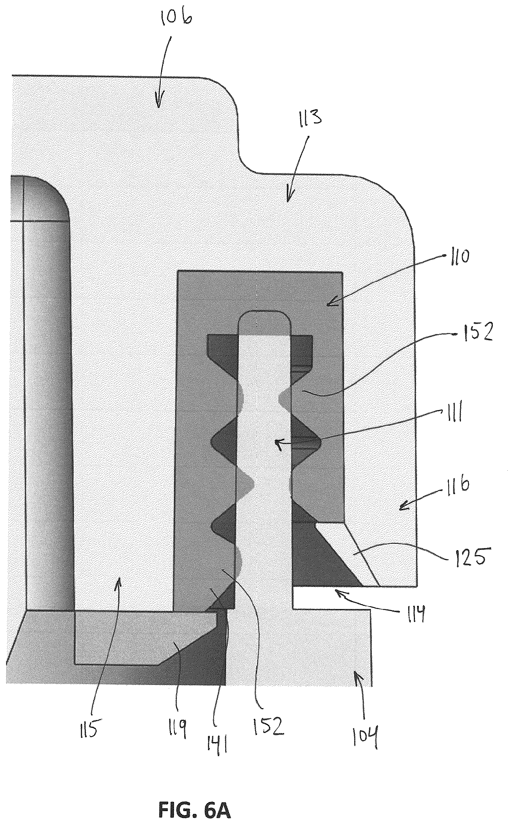

The sealing member 110 may also be inserted within the channel 114 of the upper cavity wall 113 of the cover 106. That is, the sealing member 110 may be positioned between the inner wall 115 and the outer wall 116 of the cover 106 when the cover 106 and the base 104 are in a closed position. As best shown in **FIG. 6A****,** the retention tabs 119 of the inner wall 115 of the cover 106 may extend below and engage the inner side 141 of the sealing member 110, while the retention tabs 125 of the outer wall 116 of the cover 106 may extend below and engage the outer side 142 of the sealing member 110.

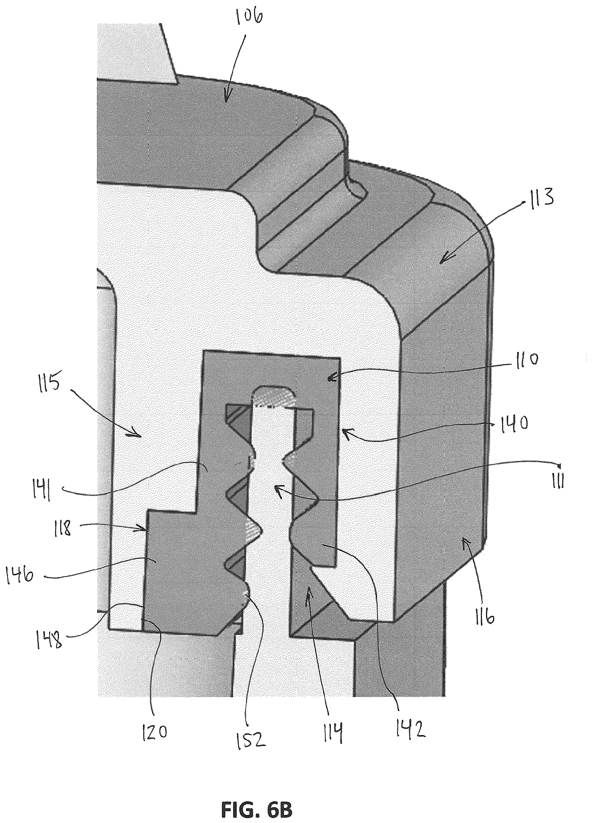

**FIG. 6B** demonstrates the sealing member 110 including one of the first plurality of engagement members 146 along the inner side 141 of the wall 140. As shown, the main wall 148 of the engagement member 146 is in abutment with the back wall 120 of the retention slot 118 of the inner wall 115 of the cover 106. Again, the retention tab 125 of the outer wall 116 of the cover 106 is shown extending below and engaging the outer side 142 to the sealing member 110.

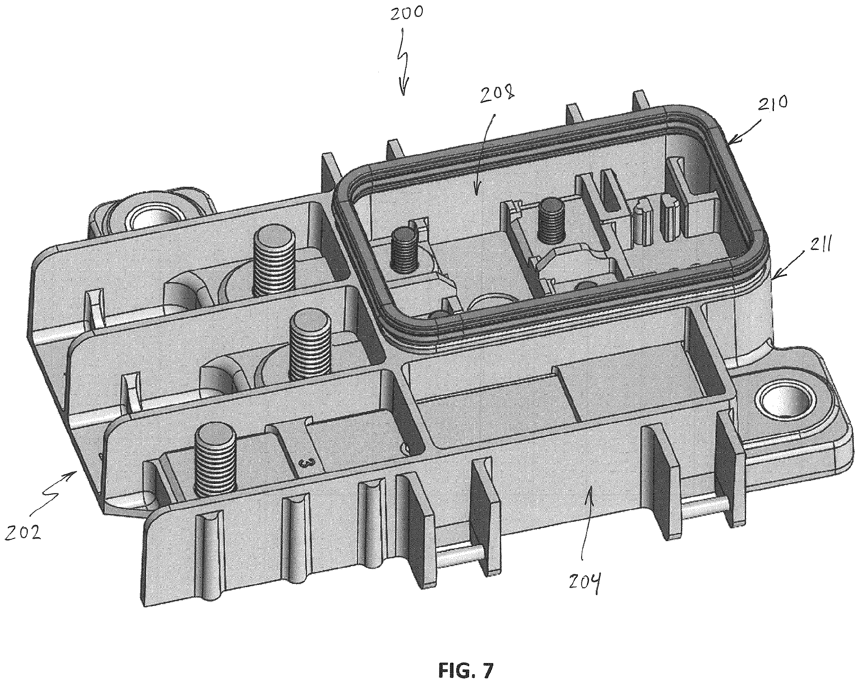

**FIG. 7** depicts another power distribution module (PDM) 200 according to one or more embodiments of the present disclosure. The PDM 200 may be the same or similar to the PDM 100 described above in certain aspects. As such, only some features of the PDM 200 will hereinafter be described for the sake of brevity. The PDM 200 may include a housing 202 including a base 204 and a cover (not shown) secured to the base 204. The housing 202 may enclose one or more electrical components (not shown) within a cavity 208 of the base 204. The cavity 208 may be surrounded by a sealing member 210, which is secured or coupled to a lower cavity wall 211.

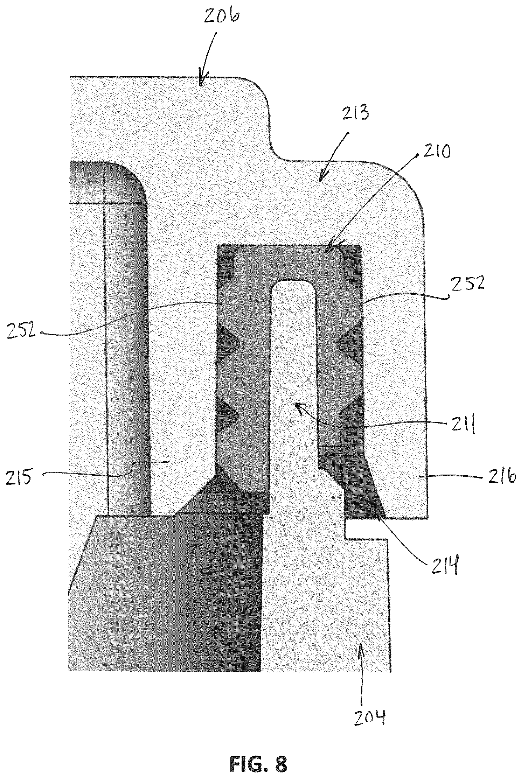

As shown in **FIG. 8****,** the sealing member 210 may be positioned atop the lower cavity wall 211 of the base 204 such that an inner side 241 and an outer side 242 of the sealing member 210 straddle the lower cavity wall 211. The sealing member 210 may also be positioned within a channel 214 of an upper cavity wall 213 of a cover 206. That is, the sealing member 210 may be positioned between an inner wall 215 and an outer wall 216 of the upper cavity wall 213. In some embodiments, the sealing member 210 may have a plurality of ridges or teeth 252 extending outwardly from the lower cavity wall 211 for engagement with inner surfaces of the channel 214 formed in the upper cavity wall 213 of the cover 206. In other embodiments, the sealing member 210 may additionally, or alternatively, have teeth 252 along an inner side thereof.

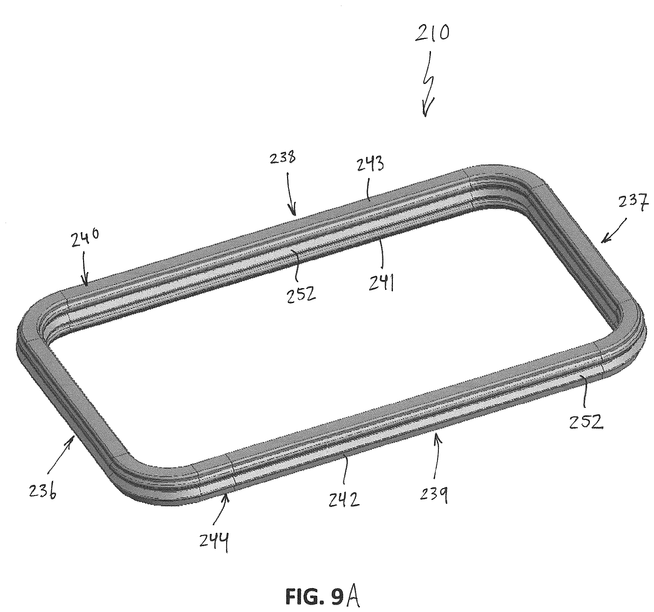

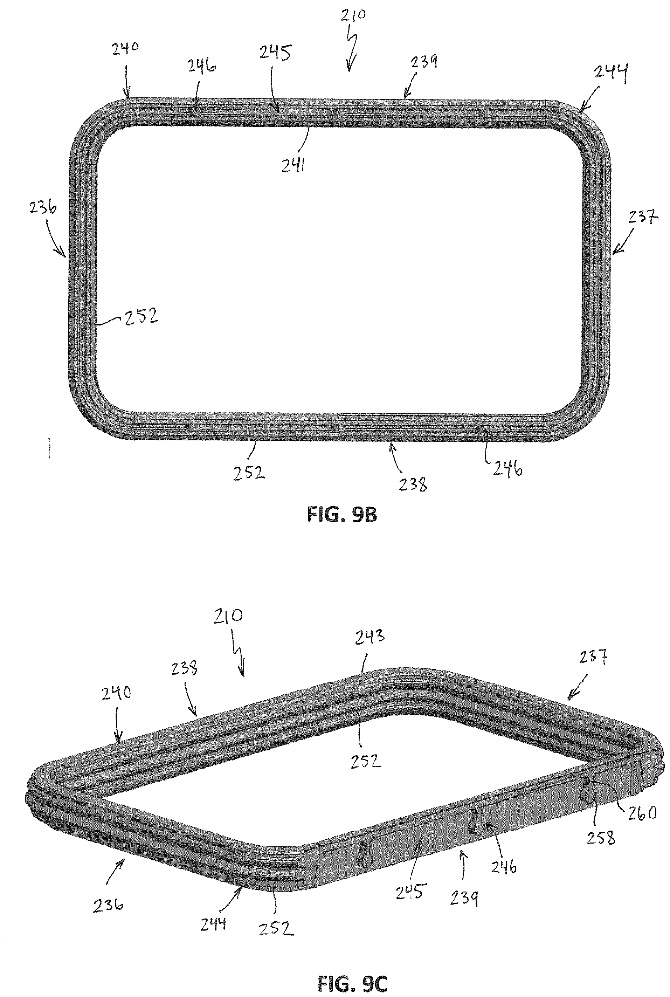

Turning now to **FIGs. 9A - 9C****,** the sealing member 210 will be described in greater detail. As shown, the sealing member 210 may include a first end 236 opposite a second end 237, and a first side 238 opposite a second side 239. The sealing member 210 may include a wall 240 defined by the inner side 241, the outer side 242, an upper surface 243, and an underside 244. As best shown in **FIG. 9B****,** the underside 244 may include a sealing member channel 245 operable to receive the lower cavity wall 211 of the base 204. The plurality of teeth 252 extend from the inner side 241 and the outer side 242 in this embodiment.

As further shown in **FIGs. 9B - 9C****,** the sealing member 210 may include a plurality of engagement members 246 within the sealing member channel 245. Although non-limiting, the engagement members 246 may include a knob or head 258 extending from a tubular portion 260. As shown, the head 258 may be substantially cylindrical, and may extend between the surfaces defining the sealing member channel 245.

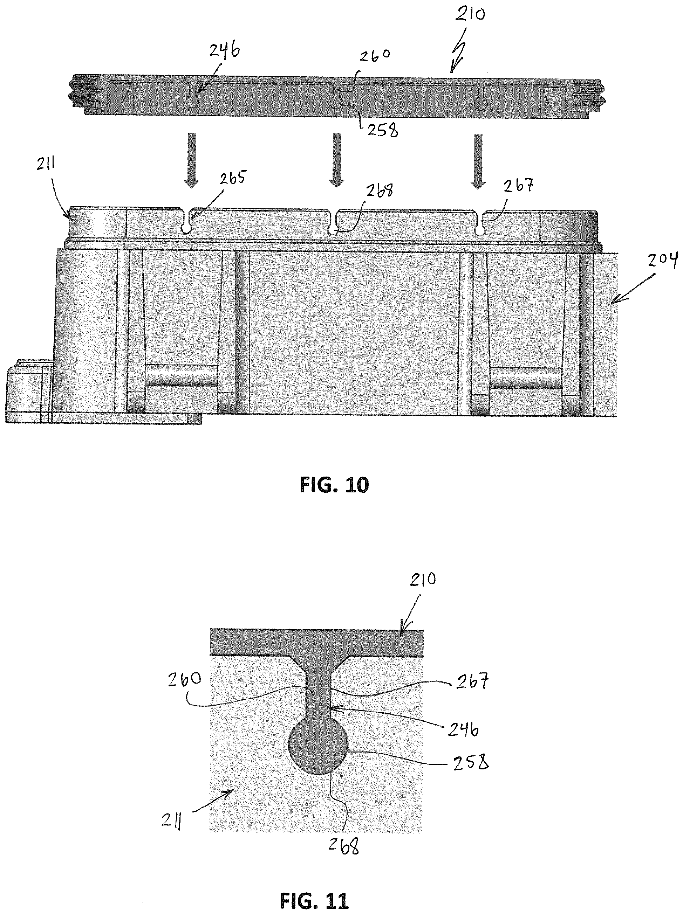

Connection between the engagement members 246 and the base 204 is demonstrated in **FIGs. 10 - 11****.** As shown, the lower cavity wall 211 of the base 204 may include a plurality of openings 265 operable to receive the engagement members 246 therein. For example, the openings 265 may include a passageway 267 connected with a cavity 268, wherein the passageway 267 is narrower than the cavity 268. When the sealing member 210 is positioned atop the lower cavity wall 211, the head 258 of the engagement members 246 is pressed through the passageway 267 and into the cavity 268. Once each head 258 relaxes to fill the corresponding cavity 268, the engagement members 246 are secured within the openings 265.

As used herein, an element or step recited in the singular and proceeded with the word "a" or "an" should be understood as not excluding plural elements or steps, unless such exclusion is explicitly recited. Furthermore, references to "one embodiment" of the present disclosure are not intended to be interpreted as excluding the existence of additional embodiments that also incorporate the recited features.

The use of "including," "comprising," or "having" and variations thereof herein is meant to encompass the items listed thereafter and equivalents thereof as well as additional items. Accordingly, the terms "including," "comprising," or "having" and variations thereof are open-ended expressions and can be used interchangeably herein.

The phrases "at least one", "one or more", and "and/or", as used herein, are open-ended expressions that are both conjunctive and disjunctive in operation. For example, each of the expressions "at least one of A, B and C", "at least one of A, B, or C", "one or more of A, B, and C", "one or more of A, B, or C" and "A, B, and/or C" means A alone, B alone, C alone, A and B together, A and C together, B and C together, or A, B and C together.

All directional references (e.g., proximal, distal, upper, lower, upward, downward, left, right, lateral, longitudinal, front, back, top, bottom, above, below, vertical, horizontal, radial, axial, clockwise, and counterclockwise) are only used for identification purposes to aid the reader's understanding of the present disclosure, and do not create limitations, particularly as to the position, orientation, or use of this disclosure. Connection references (e.g., attached, coupled, connected, and joined) are to be construed broadly and may include intermediate members between a collection of elements and relative movement between elements unless otherwise indicated. As such, connection references do not necessarily infer that two elements are directly connected and in fixed relation to each other.

Furthermore, identification references (e.g., primary, secondary, first, second, third, fourth, etc.) are not intended to connote importance or priority, but are used to distinguish one feature from another. The drawings are for purposes of illustration only and the dimensions, positions, order and relative sizes reflected in the drawings attached hereto may vary.

Furthermore, the terms "substantial" or "substantially," as well as the terms "approximate" or "approximately," can be used interchangeably in some embodiments, and can be described using any relative measures acceptable by one of ordinary skill in the art. For example, these terms can serve as a comparison to a reference parameter, to indicate a deviation capable of providing the intended function. Although non-limiting, the deviation from the reference parameter can be, for example, in an amount of less than 1 %, less than 3%, less than 5%, less than 10%, less than 15%, less than 20%, and so on.

The present disclosure is not to be limited in scope by the specific embodiments described herein. Indeed, other various embodiments of and modifications to the present disclosure, in addition to those described herein, will be apparent to those of ordinary skill in the art from the foregoing description and accompanying drawings. Thus, such other embodiments and modifications are intended to fall within the scope of the present disclosure. Furthermore, the present disclosure has been described herein in the context of a particular implementation in a particular environment for a particular purpose. Those of ordinary skill in the art will recognize the usefulness is not limited thereto and the present disclosure may be beneficially implemented in any number of environments for any number of purposes. Thus, the claims set forth below are to be construed in view of the full breadth of the present disclosure as described herein.

## Claims

1. A power distribution module, comprising:
a base comprising a lower cavity wall;
a cover comprising an upper cavity wall, wherein the lower cavity wall and the upper cavity wall define a cavity operable to house one or more protection components; and
a sealing member engaged with the upper cavity wall and the lower cavity wall, wherein the sealing member comprises:
a wall;
a plurality of engagement features along the wall, wherein the plurality of engagement features are operable to couple the sealing member to the upper cavity wall or to the lower cavity wall; and
a plurality of ridges extending from the wall, wherein the plurality of ridges are operable to engage the upper cavity wall or the lower cavity wall.

2. The power distribution module of claim 1, wherein the upper cavity wall comprises:
an inner wall; and
an outer wall separated from the inner wall by a channel, wherein the sealing member is positioned within the channel.

3. The power distribution module of claim 2, wherein the inner wall of the upper cavity wall comprises a plurality of retention slots operable to receive the plurality of engagement features.

4. The power distribution module of claim 2 or 3, wherein the inner wall of the upper cavity wall comprises a plurality of retention tabs operable to engage an upper surface of the sealing member.

5. The power distribution module of any of the claims 2-4, wherein the outer wall of the upper cavity wall comprises a second plurality of retention slots and a second plurality of retention tabs.

6. The power distribution module of any of the preceding claims, wherein the lower cavity wall extends into the channel of the upper cavity wall.

7. The power distribution module of any of the preceding claims, wherein the wall of the sealing member comprises:
an inner side; and
an outer side opposite the inner side, wherein the inner side and the outer side define a sealing member channel, and wherein the lower cavity wall extends into the sealing member channel.

8. The power distribution module of any of the preceding claims, wherein one or more of the plurality of engagement features along the wall comprises a head extending from a tubular portion

9. The power distribution module of claim 8, wherein the lower cavity wall comprises a plurality of openings, and wherein the head is positioned within one of the plurality of openings.

10. The power distribution module according to any of the preceding claims, being a housing.

11. The power distribution module according to any of the preceding claims, wherein one or more of the plurality of engagement features along the wall comprises a knob extending from a tubular portion, wherein the lower cavity wall comprises a plurality of openings, and wherein the knob is positioned within one of the plurality of openings.

12. The power distribution module according to any of the preceding claims, wherein
the cover is coupled to the base, and wherein the sealing member is flexible.

13. The power distribution module of claim 12, being an assembly for housing one or more electrical components.

14. The power distribution module of claim 13, wherein a portion of the lower cavity wall extends into the cavity.

15. The power distribution module of claims 13 or 14, wherein the plurality of retention slots and the second plurality of retention slots face one another across the channel.
